# EUROPEAN PATENT SPECIFICATION

(11) **EP 0 469 904 B1**
(45) Date of publication and mention of the grant of the patent: **21.02.1996**
(21) Application number: 91307065.2
(22) Date of filing: 01.08.1991
(51) Int. Cl.: B03B 9/06, B29B 17/00

(54) **Process and apparatus for separating heterogeneous plastic material into homogeneous fractions**
Verfahren und Vorrichtung zur Trennung von heterogenen Kunststoffen in homogene Fraktionen
Procédé et appareil pour séparer des matières plastiques hétérogènes en fractions homogènes

(30) Priority: 01.08.1990 IT 2116290
(43) Date of publication of application: 05.02.1992
(73) Proprietor: CENTRO SVILUPPO SETTORI IMPIEGO S.r.l., I-20121 Milan (IT); MILANI RESINE S.p.A., I-21054 Fagnano Olona (Varese) (IT)
(72) Inventor: Vezzoli, Annibale, I-22060 Carugo, Como (IT); Lamperti, Marino, I-20061 Carugate, Milan (IT); Milani, Francesco, I-21015 Lonate Pozzolo, Varese (IT); Albrisi, Bruno, I-21015 Lonate Pozzolo, Varese (IT)
(74) Representative: Jones, Helen Marjorie Meredith

(56) References cited:
- AT-B- 363 051
- DE-A- 3 210 972
- DE-A- 3 508 504
- DE-B- 1 278 100
- FR-A- 2 263 824
- FR-A- 2 281 166
- GB-A- 2 191 118
- US-A- 4 617 111

## Description

The present invention relates to a process for separating heterogeneous plastic material into homogeneous fractions.

More particularly, the present invention relates to a process for separating heterogeneous plastic material into families of materials which are thermally consistent with one another, and to an apparatus suited to the purpose.

The present invention particularly relates to a process for separating heterogeneous plastic material into two fractions, one fraction substantially containing polyethylene terephthalate and the other fraction substantially containing polyvinylchloride.

The term "heterogeneous plastic material", whenever used in the present specification and in the claims, means a mixture of thermoplastic and thermosetting polymers such as (high, medium, low density) polyethylene, polypropylene, polystyrene, foamed polystyrene, PVC, PET, ABS, polyester resins, polyamides, etc., obtained, after a first separation, from town solid wastes, or from a differentiated collection or deriving from the conversion industry as production wastes.

A growing awareness of ecological and environmental factors has led to greater consideration of the serious problems of disposal of the plastic materials which are present in the town solid wastes.

In Italy, at present, the production of town solid wastes is growing by about 1% per year and is now evaluated at approximately 18 to 20 million tons per year, 1.4 million tons of which (about 7.5%) are plastics.

Recycling of such a large amount of waste material would not only decrease the total waste volume but would also enable recovery of the residual use value of the plastics. Economical advantages would therefore arise from both a decrease in the total waste volume for disposal and in the decrease in the consumption of fresh plastics material. Furthermore, there would also be a possibility that the energy content of the plastics could be recovered at the end of their life cycle by incineration in a furnace suitable for heat recovery.

One important application for recycled plastic material is in the re-use of each component of the heterogeneous mixtures in combination with fresh plastics material or in the selection of homogeneous fractions for the production of shaped bodies. The shaped bodies produced will have improved physical/mechanical properties compared to those of identical shaped bodies which are formed from the heterogeneous mixtures.

The main problem associated with the recycling and the recovery of plastic material is that of separating it into homogeneous fractions, preferably comprising the same type of polymer or, at least comprising polymers thermally consistent with one another. In particular, continuous and as much as possible automated processes are required.

At present, the mixtures of plastic material for recycling generally comprise: polyolefins such as polyethylene, polypropylene, etc., in an amount generally higher than about 20% by weight, generally from 40% to 50%; a mix substantially comprising polyvinyl chloride (PVC), polystyrene, polyethylene terephthalate (PET), together representing about 50-60% by weight; and about 0-10% by weight of other products such as thermosetting resins, ABS, rubbers, acrylic resins, polyamides, etc.

AT-B-363051 discloses a process for recovering polymers (particularly polyolefins) from waste products and re-using them. The process described comprises washing the waste materials to separate polymeric material from other materials; adding a mixture of the separated material to polymeric material of one type and chopping; separation of the chopped polymer mixture according to specific weight by flotation; drying the separated polyolefins; mixing the separated polyolefins with chopped polymer products of the same type and extruding and granulating the mixture.

The separation of these mixtures by means of usual water flotation processes has proved unsatisfactory since although materials essentially comprising polyolefins which are compatible with one another, float to the surface, high specific weight materials, which comprise two reciprocally incompatible polymers such as PET and PVC, sink to the bottom.

PVC and PET are incompatible as they have different melting points and require different processing temperatures in the molten state. In fact, PET melts at about 265°C while PVC, as is stated in "The Condensed Chemical Dictionary (Tenth Edition)" Gessner G. Hawlay, Van Nostrand Reinhold Company, 1981, decomposes at 148°C and generates toxic gases.

One process for separating a mixture of PVC and PET is described in US-A-4617111, where a solution comprising a low density solvent for PVC, water and sodium hydroxide is used.

The Applicants have now found a process which enables continuous and automatic separation of a mixture of plastic materials, in particular, plastic materials having a high specific weight, into two fractions, one fraction essentially containing PET and the other fraction essentially containing PVC.

Thus, it is an object of the present invention to provide a process for separating heterogeneous plastic material into families of reciprocally compatible materials, said process comprising:
a) feeding triturated plastic material to a first water-containing separation tank in order to separate the high specific weight plastics material from that having a low specific weight;
b) recovering the mix of high specific weight plastics material from the bottom of the first separation tank and drying in a first drier;
c) treating the resulting dried high specific weight plastics material mix with a selective solvent capable of swelling/modifying a fraction of the mix, the fraction comprising substantially compatible plastics material; and
d) removing the excess solvent from the treated plastics material by drying; and then feeding the treated plastics material mix to a second separation tank, in which the non-swollen/non-modified plastic material sinks towards the bottom of the tank, while the swollen/modified material collects substantially at the surface of the liquid in the tank and is discharged.

In particular, the process of the present invention, which may be continuous or discontinuous, comprises a first step, in which the mixture of heterogeneous plastic material is separated into two fractions: the first fraction being composed of products having a specific weight lower than that of water and essentially consisting of polyolefins, such as polyethylene and polypropylene, and of a foamed polystyrene; the second fraction being composed of products having a specific weight higher than that of water and essentially consisting of compact polystyrene, PVC and PET.

While the first fraction comprises materials which are thermally compatible with one another and therefore can be utilized again without the need of further separations, the second fraction comprises at least two materials such as PVC and PET which are incompatible with each other and should preferably be separated prior to their possible re-use.

According to a preferred embodiment of the process of the present invention it is possible to operate in such manner as to recover a heavy fraction, already enriched in PVC and PET, from the bottom of the first tank.

To obtain this result, the first tank is fed with recirculating water, which generates a stream flow inside said tank.

In this condition, the high specific weight materials contained in the heavy fraction, such as PVC and PET, fall out of the liquid stream towards the bottom of the tank almost immediately, while the other materials, belonging to the heavier fraction and having specific weights closer to that of water, for example polystyrene, are carried along by the stream flow as they fall towards the bottom of the tank so that they deposit onto the tank bottom in areas well distinct from the ones onto which the PVC- and PET-containing mix deposits. This enables separate recovery of the heavier fractions and the less heavy fractions.

The fraction recovered from the bottom of the separation tank, which may be a fraction enriched in PVC and PET, is dried and then treated with a solvent capable of swelling/modifying a portion of the fraction. The portion which can be affected by the solvent comprises plastics materials which are substantially compatible with one another.

It is particularly preferred to choose a solvent capable of attacking a material such as PVC, and which does not affect PET which, as is known, exhibits a high chemical resistance. The resultant swollen material will exhibit an increase in the original volume, which will therefore result in a decrease in the relevant specific weight.

Solvents capable of operating in this sense are represented by swelling agents for plastic materials, preferably liquid agents which have solvent action. Examples of such solvents are ketones such as acetone, methylethylketone, cyclohexanone, etc., dimethylformamide and chlorinated solvents such as methylene chloride; the preferred solvent being acetone.

The treatment with the solvent can be conducted at room temperature or at a higher temperature, for example from 40 to lOO°C. The contact time of the solvent with the plastics materials depends on the temperature, but generally ranges from 5 to 60 minutes.

At the end of the treatment the plastic material which is affected by the solvent will appear either completely swollen or only superficially altered, depending upon the conditions, particularly time, of treatment. In both cases it is preferable to recover the solvent.

The plastics material is then dried to remove the solvent either impregnated or adsorbed on the plastics material. Preferably the solvent is removed using the drying-by-heat method at a temperature ranging from 25° to 60°C, optionally in the presence of air circulation.

At the end of the drying treatment, the mix of heterogeneous high specific weight plastic material is composed of a portion of unaltered material consisting, for example, essentially of PET, and of a portion of modified material, essentially consisting of PVC and, optionally, polystyrene.

This heterogenous mix can be separated gravimetrically or by flotation.

In particular, in the case of fully swollen polymers, the separation preferably occurs gravimetrically in a second separation tank containing a fluid having a density higher than the density of the modified polymer.

A liquid suitable for use in this second separation can be selected from liquids having a density preferably ranging from 1 to 1.1 kg/dm3, such as water, water/glycols mixtures, water/sodium chloride mixtures, water/non-foaming surfactants mixtures, etc.

Alternatively, in the case of only superficially modified polymers, the separation preferably occurs by flotation in which air or another gaseous vehicle, such as nitrogen, carbon dioxide, etc., is bubbled through the liquid in the second separation tank. The materials which have been altered by the chemical treatment, will have a rough surface, and therefore the bubbled gas will cause them to rise to the surface of the liquid while the other materials, having a smooth surface, sink in the liquid because they offer no hold to the bubbles of gas.

An alternative separation technique, which is particularly suited when the plastic material has been treated with the solvent for short times sufficient only to soften the surface of the reactive portion of the plastics material comprises evaporating the solvent which wets the material surface, while retaining the adsorbed agent.

The plastic material still holding adsorbed solvent is tacky and therefore it can be treated with low specific weight powders, which adhere to the tacky particles while they slip off and do not adhere to the plastics material resistant to the action of the solvents.

Suitable examples of low specific weight powders are microspheroidal silica, alkaline and/or alkaline-earth silicates, carbonates, etc., in the foamed form.

The so treated plastic material mix can be separated gravimetrically since the material modified by the solvent is maintained on the separation fluid surface due to the floating effect of the light powders.

Another object of the present invention is an apparatus for separating heterogeneous plastic material into substantially homogeneous fractions which comprises:
i) a first separation tank which, in use contains water, equipped with means suitable for recovering material floating on the surface of liquid in the tank and means for recovering material from the bottom of the tank;
ii) a first means for drying the plastic material recovered from the bottom of the first separation tank;
iii) a means for containing a selective solvent capable of swelling/modifying a fraction of the heterogeneous plastic material, the fraction consisting of polymers substantially compatible with one another;
iv) a second means for drying to substantially remove the excess solvent from the so treated plastics material;
v) a second separation tank for containing a liquid having a known density, in order to separate the swollen/modified plastic material from the non-swollen/modified material; and
vi) an optional third drying means for drying the swollen/modified plastic material.

The second means for drying is positioned so that, in use, excess solvent is removed from the plastics material prior to separation in the second separation tank. Most preferably the second drying means comprises a means for evaporating the solvent off the treated material. The third drying means is provided for drying the modified plastic material after separating the second separation tank. Preferably the third drying means is also capable of removing substantially the last traces of solvent.

According to a preferred apparatus of the present invention, the separation tanks have substantially a parallelepiped form with dimensions which depend on the amounts of plastic material to be treated. Tanks having a length from 2 to 6 meters, a height and a width from 0.5 to 2 meters are the most suitable for the present invention.

The means for containing the chemical agent preferably comprises a pipe. The dimensions of the pipe depend on the amount of plastic material to be treated. A pipe having a diameter from .5 to 1 meter and length from 3 to 10 meters is preferred. Preferably, the plastic material can be moved inside the pipe for example, pushed by a screw conveyor.

The constructive and functional characteristics of he apparatus for separating heterogeneous plastic material into homogeneous fractions, which is the object of the present invention, can be better understood from the following detailed description, in which reference is made to the annexed figure, which represents an exemplifying but not limitative scheme of the present invention.

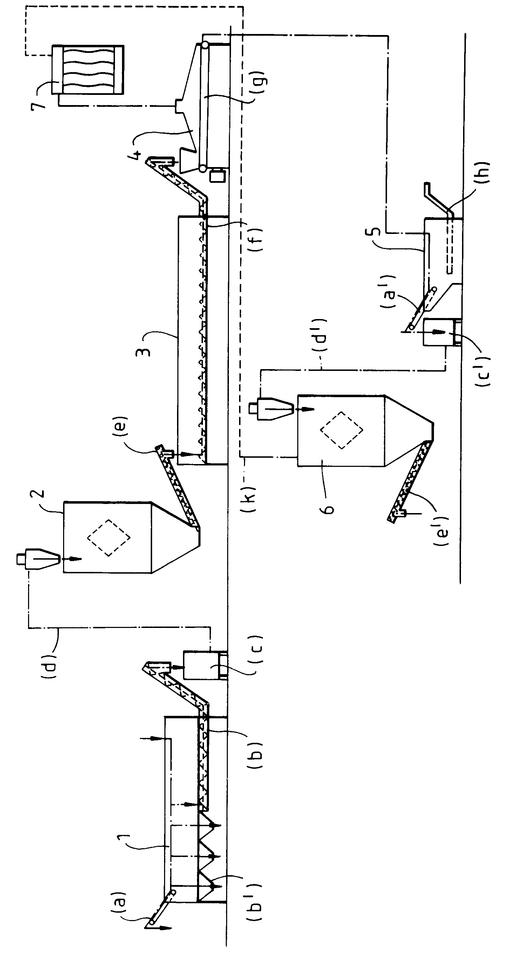

With reference to the figure, the apparatus of the present invention comprises:
a first separation tank (1) equipped with a semisubmerged conveyor belt (a), a screw conveyor (b) and collecting areas (b') located on its bottom;
a collecting vessel (c) connected to a transfer line, for example a pneumatic transfer line (d);
a first drier (2) connected, on the bottom, to a screw conveyor (e);
a tubular vessel (3) containing the modifying or dissolving chemical agent and a screw conveyor (f);
a second drier (4) of the belt (g) type, equipped with a vapour condenser (7) for a possible recycle of the solvent;
a second separation tank (5) equipped with a semisubmerged conveyor belt (a')and with a screw conveyor (h) located on the bottom;
a collecting vessel (c') connected, through a transfer line (d'), to a third drier (6) which, in turn, is connected on the bottom to a screw conveyor (e'). Solvent residues, if any, are recycled to condenser (7) through line (k).

The annexed figure and the following description clearly illustrate the operation of the present apparatus.

The heterogeneous plastic material, charged to the first separation tank (1), in the inside of which a water recycle generates a stream flow, is divided into two fractions: the light one, which floats, being recovered by belt (a), while the heavy fraction sinks down onto the tank bottom.

In particular, the high specific weight materials contained in the heavy fraction, such as PVC and PET, sink almost immediately and are recovered by screw conveyor (b), other materials, such as polystyrene, having a specific weight close to the one of water, are carried along by the stream flow while sinking and deposit in the collecting areas (b'), from which they are recovered by means which are not shown in the figure.

The heavier fraction, essentially consisting of PVC and PET, is collected in (c), wherefrom it is sent to a first drier (2) for drying.

By means of screw conveyor (e) the heavier fraction is fed to vessel (3) containing the solvent which will react with and swell for example PVC.

After a contact time, which depends on the type of the solvent and on the temperature at which the treatment is carried out, the heavy fraction containing the swollen/modified portion enters drier (4), which contains conveyor belt (g), for the recovery of the solvent, which is condensed in (7).

The so treated plastic material mix is conveyed to the second separation tank (5), in which PVC (and other swollen materials, if any), which floats, is separated from PET, which precipitates, as it has remained unaltered. The latter is recovered by means of screw conveyor (h), while PVC, recovered by belt (a'),is sent to the last drier (6) in order to remove also the last solvent traces, if still present.

When carrying the present invention into effect, various changes, modifications and variations can be brought to the various parts which form the apparatus for separating heterogeneous plastic material into homogeneous fractions, which is illustrated, as an example, in the drawing of the annexed figure, without departing from the spirit and the scope of the present invention.

## Claims

1. A process for separating heterogeneous plastic material into families of reciprocally compatible materials, which comprises:
a) feeding triturated plastic material to a first water-containing separation tank (1) in order to separate the high specific weight plastics material products from that having a low specific weight;
b) recovering the mix of high specific weight plastics material from the bottom of the first separation tank and drying in a first drier (2);
c) treating the dried high specific weight plastics materials mix with a selective solvent capable of swelling/modifying a fraction of the mix, the fraction comprising substantially compatible plastics materials; and
d) removing the excess solvent from the treated plastics material by drying; and feeding the treated plastics materials to a second separation tank (5), in which the non-swollen/non-modified plastic material sinks towards the bottom of the tank while the swollen/modified material collects substantially at the surface of the liquid in the tank and is discharged.

2. The process according to claim 1, wherein the first separation tank (1) is fed with recirculation water which generates a stream flow in the tank.

3. The process according to claim 1 or 2, wherein the solvent is selected from swelling agents for plastic materials, preferably liquids capable of acting as solvents.

4. The process according to any preceding claim, wherein the solvent is acetone.

5. The process according to any preceding claim, wherein the mix of high specific weight plastics material is contacted with the solvent at a temperature which is at least room temperature for a contact time ranging from 5 to 60 minutes.

6. A process according to claim 1 in which after treatment of the dried high specific weight plastics material with the solvent, the excess solvent is removed from the plastics material prior to feeding the plastics material into the second separation tank (5) and recovered.

7. The process according to any preceding claim, wherein the solvent is removed from the high specific weight plastic material by means of drying at a temperature ranging from 25° to 60°C.

8. The process according to any preceding claim, wherein the separation in the second separation tank (5) is either gravimetric or flotation separation.

9. The process according to any preceding claim, wherein the separation in the second separation tank (5) is conducted in the presence of a fluid having a higher density than the one of the plastics material which was been swollen/modified by the solvent.

10. An apparatus for separating heterogeneous plastic material into homogeneous fractions, which comprises:
i) a first separation tank (1) which in use, contains water, equipped with means for recovering material floating on the surface of liquid (a) in the tank and means for recovering material from the bottom of the tank (b');
ii) a first means for drying (2) plastic material recovered from the bottom of the first separation tank (1);
iii) a means for containing (3) a selective solvent capable of swelling/modifying a fraction of the heterogeneous plastics material; the fraction consisting of polymers substantially compatible with one another;
iv) a second means for drying (4) to substantially remove the excess solvent from the treated plastics material;
v) a second separation tank (5) for containing a liquid having a known density in order to separate the swollen/modified plastic material from the non-swollen/modified material; and
vi) an optional third drying means (6) for drying the swollen/modified plastic material.

11. An apparatus according to claim 10 additionally comprising a condensor (7) so that in use, excess solvent which is removed from the plastics material can be recovered.

12. The apparatus according to claim 10 or claim 11 wherein one or both of the separation tanks (1, 5) exhibit a substantially parallelepiped form.

13. The apparatus according to any of claims 10 to 12 wherein the means for containing a solvent comprises a pipe.

14. Use of the process according to any of claims 1 to 9 or the apparatus according to any of claims 10 to 13 for separating plastics materials wherein the high specific weight plastics comprise PVC and PET.

## Patentansprüche

1. Verfahren zur Trennung von heterogenem Kunststoffmaterial in Familien von gegenseitig kompatiblen Materialien, wobei man
a) pulverisiertes Kunststoffmaterial in einen ersten, Wasser enthaltenden Trenntank (1) einspeist, um die Kunststoffmaterialprodukte mit hohem spezifischem Gewicht von denjenigen mit einem niedrigen spezifischen Gewicht abzutrennen;
b) das Gemisch aus Kunststoffmaterial mit hohem spezifischem Gewicht vom Boden des ersten Trenntanks gewinnt und in einem ersten Trockner (2) trocknet;
c) das getrocknete Kunststoffmaterialgemisch mit hohem spezifischem Gewicht mit einem selektiven Lösungsmittel mit der Fähigkeit, eine Fraktion des Gemisches zu quellen/zu modifizieren, behandelt, wobei die Fraktion im wesentlichen kompatible Kunststoffmaterialien umfaßt, und
d) das überschüssige Lösungsmittel von dem behandelten Kunststoffmaterial durch Trocknen entfernt, und die behandelten Kunststoffmaterialien in einen zweiten Trenntank (5) einspeist, in dem das nicht-gequollene/nicht-modifizierte Kunststoffmaterial zum Boden des Tanks sinkt, während das gequollene/modifizierte Material sich im wesentlichen an der Oberfläche der Flüssigkeit in dem Tank ansammelt und entnommen wird.

2. Verfahren nach Anspruch 1, wobei man den ersten Trenntank (1) mit Kreislaufwasser, das einen Dampfstrom im Tank erzeugt, beschickt.

3. Verfahren nach Anspruch 1 oder 2, wobei man das Lösungsmittel aus Quellmitteln für Kunststoffmaterialien, bevorzugt Flüssigkeiten mit der Fähigkeit, als Lösungsmittel zu wirken, auswählt.

4. Verfahren nach einem der vorausgehenden Ansprüche, wobei das Lösungsmittel Aceton ist.

5. Verfahren nach einem der vorausgehenden Ansprüche, wobei man das Gemisch aus Kunststoffmaterial mit hohem spezifischem Gewicht mit Lösungsmittel bei einer Temperatur, die mindestens Raumtemperatur ist, für eine Kontaktzeit im Bereich von 5 bis 60 min. in Kontakt bringt.

6. Verfahren nach Anspruch 1, wobei man nach der Behandlung des getrockneten Kunststoffmaterials mit hohem spezifischem Gewicht mit dem Lösungsmittel das überschüssige Lösungsmittel von dem Kunststoffmaterial vor der Einspeisung des Kunststoffmaterials in den zweiten Trenntank (5) entfernt und wiedergewinnt.

7. Verfahren nach einem der vorausgehenden Ansprüche, wobei man das Lösungsmittel von dem Kunststoffmaterial mit hohem spezifischem Gewicht durch Trocknen bei einer Temperatur im Bereich von 25° bis 60°C entfernt.

8. Verfahren nach einem der vorausgehenden Ansprüche, wobei die Trennung in dem zweiten Trenntank (5) entweder eine gravimetrische Trennung oder eine Trennung durch Flottieren ist.

9. Verfahren nach einem der vorausgehenden Ansprüche, wobei man die Trennung in dem zweiten Trenntank (5) in Gegenwart einer Flüssigkeit mit einer höheren Dichte als die des Kunststoffmaterials, das durch das Lösungsmittel gequollen/modifiziert wurde, durchführt.

10. Vorrichtung zur Trennung eines heterogenen Kunststoffmaterials in homogene Fraktionen, umfassend
i) einen ersten Trenntank (1), der bei Betrieb Wasser enthält, der mit Mitteln zur Gewinnung von Material, das auf der Oberfläche der Flüssigkeit (a) in dem Tank aufschwimmt, und mit Mitteln zur Gewinnung des Materials vom Boden des Tanks (b') ausgestattet ist;
ii) ein erstes Mittel zur Trocknung (2) des Kunststoffmaterials, das vom Boden des ersten Trenntanks (1) gewonnen wurde;
iii)ein Mittel zur Aufnahme (3) eines selektiven Lösungsmittels mit der Fähigkeit, eine Fraktion des heterogenen Kunststoffmaterials zu quellen/zu modifizieren, wobei die Fraktion im wesentlichen miteinander kompatible Polymere umfaßt;
iv) ein zweites Mittel zur Trocknung (4), um überschüssiges Lösungsmittel von dem behandelten Kunststoffmaterial im wesentlichen zu entfernen;
v) einen zweiten Trenntank (5) zur Aufnahme einer Flüssigkeit mit einer bekannten Dichte, um das gequollene/modifizierte Kunststoffmaterial von dem nicht-gequollenen/nicht-modifizierten Material zu trennen; und
vi)gegebenenfalls ein drittes Trocknungsmittel (6) zur Trocknung des gequollenen/modifizierten Kunststoffmaterials.

11. Vorrichtung nach Anspruch 10, umfassend zusätzlich einen Kondensator (7), so daß bei Betrieb überschüssiges Lösungsmittel, das von dem Kunststoffmaterial entfernt wird, wiedergewonnen werden kann.

12. Vorrichtung nach Anspruch 10 oder 11, wobei ein oder beide Trenntank(s) (1,5) im wesentlichen die Form eines Parallelepipeds besitzt/besitzen.

13. Vorrichtung nach einem der Ansprüche 10 bis 12, wobei das Mittel zur Aufnahme des Lösungsmittels eine Leitung umfaßt.

14. Verwendung eines Verfahrens nach einem der Ansprüche 1 bis 9 oder der Vorrichtung nach einem der Ansprüche 10 bis 13 zur Trennung von Kunststoffmaterialien, wobei der Kunststoff mit hohem spezifischem Gewicht PVC und PET umfaßt.

## Revendications

1. Un procédé pour séparer des matières plastiques hétérogènes en familles de matières mutuellement compatibles, qui comprend:
a) le chargement de matières plastiques broyées dans un premier réservoir de séparation (1) contenant de l'eau, afin de séparer les matières plastiques de poids spécifique élevé de celles qui ont un poids spécifique faible;
b) la récupération du mélange de matières plastiques de poids spécifique élevé depuis le fond du premier réservoir de séparation, et le séchage dans un premier séchoir (2);
c) le traitement du mélange séché de matières plastiques de poids spécifique élevé, avec un solvant sélectif capable de faire gonfler/modifier une fraction du mélange, la fraction comprenant des matières plastiques sensiblement compatibles; et
d) l'élimination du solvant en excès des matières plastiques traitées par séchage; et le chargement des matières plastiques traitées dans un second réservoir de séparation (5), dans lequel les matières plastiques non gonflées/non modifiées tombent dans le fond du réservoir, tandis que les matières gonflées/modifiées se rassemblent sensiblement à la surface du liquide dans le réservoir, et sont déchargées.

2. Le procédé selon la revendication 1, dans lequel le premier réservoir de séparation (1) est chargé avec de l'eau en recirculation, qui génère un courant dans le réservoir.

3. Le procédé selon la revendication 1 ou 2, dans lequel le solvant est choisi parmi des agents de gonflement pour matières plastiques, de préférence des liquides capables de jouer le rôle de solvants.

4. Le procédé selon l'une quelconque des revendications précédentes, dans lequel le solvant est de l'acétone.

5. Le procédé selon l'une quelconque des revendications précédentes, dans lequel le mélange de matières plastiques de poids spécifique élevé est mis en contact avec le solvant à une température qui est au moins égale à la température ambiante, pendant une durée de contact comprise entre 5 et 60 minutes.

6. Un procédé selon la revendication 1, dans lequel, après traitement par le solvant des matières plastiques de poids spécifique élevé, le solvant en excès est éliminé des matières plastiques avant le chargement des matières plastiques dans le second réservoir de séparation (5), et il est récupéré.

7. Le procédé selon l'une quelconque des revendications précédentes, dans lequel le solvant est éliminé des matières plastiques de poids spécifique élevé par séchage à une température comprise entre 25° et 60°C.

8. Le procédé selon l'une quelconque des revendications précédentes, dans lequel la séparation dans le second réservoir de séparation (5) est une séparation soit par sédimentation gravitaire, soit par flottation.

9. Le procédé selon l'une quelconque des revendications précédentes, dans lequel la séparation dans le second réservoir de séparation (5) est effectuée en présence d'un fluide ayant une densité supérieure à celle des matières plastiques qui ont été gonflées/modifiées par le solvant.

10. Un appareil pour séparer des matières plastiques hétérogènes en fractions homogènes, qui comprend:
i) un premier réservoir de séparation (1) qui, pendant l'utilisation, contient de l'eau, et qui est équipé de moyens convenant pour récupérer des matières flottant sur la surface du liquide (a) du réservoir, et de moyens pour récupérer des matières depuis le fond du réservoir (b');
ii) un premier moyen pour sécher (2) dl matières plastiques récupérées du fond du premier réservoir de séparation (1);
iii) un moyen pour contenir (3) un solvant sélectif capable de faire gonfler/de modifier une fraction des matières plastiques hétérogènes, la fraction étant constituée de polymères sensiblement compatibles entre eux;
iv) un second moyen pour sécher (4), de façon à éliminer sensiblement le solvant en excès des matières plastiques traitées;
v) un second réservoir de séparation (5) destiné à contenir un liquide ayant une densité connue, afin de séparer les matières plastiques gonflées/modifiées des matières non gonflées/non modifiées; et
vi) un troisième moyen optionnel (6) de séchage pour sécher les matières plastiques gonflées/modifiées.

11. Un appareil selon la revendication 10, comprenant de plus un condenseur (7), de façon que, pendant l'utilisation, le solvant en excès qui est éliminé des matières plastiques puisse être récupéré.

12. L'appareil selon la revendication 10 ou la revendication 11, dans lequel un ou les deux réservoirs de séparation (1, 5) présente(nt) une forme sensiblement parallélépipèdique.

13. L'appareil selon l'une quelconque des revendications 10 à 12, dans lequel les moyens pour contenir un solvant comprennent une conduite.

14. L'utilisation du procédé selon l'une quelconque des revendications 1 à 9, ou de l'appareil selon l'une quelconque des revendications 10 à 13, pour séparer des matières plastiques, dans laquelle les matières plastiques de poids spécifique élevé comprennent du PVC et du PET.
